# EUROPÄISCHE PATENTSCHRIFT

(11) **EP 0 901 209 B1**
(45) Veröffentlichungstag und Bekanntmachung des Hinweises auf die Patenterteilung: **25.10.2000**
(21) Anmeldenummer: 98112533.9
(22) Anmeldetag: 07.07.1998
(51) Int. Cl.: H02G 15/04, H02G 3/06

(54) **Kabelverschraubung für Erdungs- oder Abschirmkabel mit einem gegen das Kabel pressbaren Klemmeinsatz**
Cable gland for earthing or screening cable with a tightening insert gripping the cable
Presse-étoupe pour câble de mise à la masse ou de blindage avec une pièce d'insertion de serrage contre le câble

(30) Priorität: 03.09.1997 DE 19738517
(43) Veröffentlichungstag der Anmeldung: 10.03.1999
(73) Patentinhaber: Anton Hummel Verwaltungs-GmbH, D-79183 Waldkirch (DE)
(72) Erfinder: Zügel, Fritz, 79183 Waldkirch (DE)
(74) Vertreter: Schmitt, Hans, Dipl.-Ing.

(56) Entgegenhaltungen:
- EP-A- 0 598 261
- EP-A- 0 778 644
- DE-U- 9 401 973
- DE-U- 29 612 482

## Beschreibung

Die Erfindung betrifft eine Kabelverschraubung für Erdungs- oder Abschirm-Kabel mit einer Halte- oder Schraubhülse oder Aufnahmehülse aus elektrisch leitendem Werkstoff, insbesondere aus Metall, mit einer damit über ein Gewinde verbindbaren Gegenhülse oder dergleichen Druckstück, insbesondere mit einer Überwurfmutter, zum Fixieren des ein Metallgeflecht oder Kabelaußenleiter zur Erdung oder Abschirmung des Kabelinneren aufweisenden Kabels mit einem mit Hilfe der Gegenhülse gegen das Kabel preßbaren Klemmeinsatz, wobei die Gegenhülse den Klemmeinsatz mit einer im wesentlichen ringartigen Druckfläche zumindest an einer der Stirnseiten beaufschlagt oder übergreift und beim Anziehen des Gewindes mit einer sich verjüngenden Form, zum Beispiel mittels Rundung oder mittels eines Konus, welcher am Klemmeinsatz und/oder in der Schraubhülse oder anstelle der ringartigen Druckfläche in der Gegenhülse angeordnet ist, **und durch welchen ein** mit axialen Schlitzen versehene**r**, Klemmfinger bildender Bereich des Klemmeinsatzes radial **nach innen** hin verform**bar ist**, wobei in Verlängerung des Klemmeinsatzes an seinem den Klemmfingern abgewandten Bereich in Gebrauchsstellung eine elektrische Verbindung mit einer abisolierten Zone des Kabels oder mit abisolierten Drähten des Metallgeflechtes oder des oder der Kabelaußenleiter besteht.

Eine derartige Kabelverschraubung ist aus der EP-0 598 261 B1 bekannt und hat sich bewährt. Der Klemmeinsatz besteht dabei aus isolierendem Kunststoff und erfaßt umgebogene Drähte des Drahtgeflechtes derart, daß diese in Gebrauchsstellung zwischen dem Klemmeinsatz und der Schraubhülse eingeklemmt werden. Dadurch wird ein guter Kontakt zwischen diesen Drähten und der Halte- oder Schraubhülse hergestellt. Es ist jedoch ein zusätzlicher Aufwand erforderlich, weil die Drähte des Drahtgeflechtes umgebogen und zwischen Klemmeinsatz und Schraubhülse eingebracht und dort untergebracht werden müssen.

Der Erfindung liegt deshalb die Aufgabe zugrunde, eine Kabelverschraubung der eingangs genannten Art zu schaffen, bei welcher dieser zusätzliche Aufwand des Einbringens umgebogener Drähte des Drahtgeflechtes zwischen Klemmeinsatz und Schraubhülse vermieden wird. Gleichzeitig soll - bei Bedarf - eine gute Abdichtung der Kabelverschraubung möglich sein.

Zur Lösung dieser Aufgabe ist vorgesehen, daß die Kabelverschraubung in axialer Verlängerung des Klemmeinsatzes auf der dessen Klemmfingern abgewandter Seite im Bereich der abisolierten Zone oder abisolierten Drähte **in Gebrauchsstellung** einen Kontakteinsatz aus elektrisch leitendem Werkstoff aufweist und im Inneren der Schraubhülse eine konische oder gerundete, sich verjüngende Druckfläche zum Zusammenwirken mit der dem Klemmeinsatz abgewandten Stirnseite des Kontakteinsatzes in der Weise vorgesehen ist, daß beim axialen Verschieben oder Anziehen des Gewindes **der Gegenhülse zur Schraubhülse hin** der Kontakteinsatz im Bereich der ihn beaufschlagenden Druckfläche radial nach innen verformbar und **in Gebrauchsstellung** an der abisolierten Zone oder den abisolierten Drähten oder Leitern andrückbar ist.

Durch den Klemmeinsatz kann also die Kabelverschraubung mit hoher Zugentlastung das eigentliche Kabel erfassen und erforderlichenfalls unter Beifügung einer Dichtung auch gut abdichten. Vor allem ist es jedoch durch die vorbeschriebene Lösung möglich, durch das Anziehen des Gewindes des Druckstückes, in der Regel einer Überwurfmutter, gegenüber der Halte- oder Schraubhülse, gleichzeitig die Kontaktierung mit Hilfe des Kontakteinsatzes zu erreichen, so daß also eine einzige Anziehbewegung gleichzeitig die Verklemmung, eventuelle Abdichtung und Kontaktierung bewirkt. Somit ist ein Lösen und Umbiegen von Einzeldrähten oder Leitern und deren Einführen zwischen den Klemmeinsatz und die Halte- oder Schraubhülse nicht mehr erforderlich. Dies ergibt den weiteren Vorteil, daß die Klemm- oder Kabelverschraubung gemäß der Erfindung auch zum Einsatz kommen kann, wenn nicht das Ende des Kabels vollständig abisoliert ist, sondern im Befestigungsbereich der Verschraubung nur ein Streifen abisoliert wird und sich anschließend die Isolierung des Kabels wieder fortsetzt. Somit kann auch im Verlauf eines Kabels an einer beliebigen Stelle eine Kontaktierung oder Erdung bei gleichzeitiger Fixierung des Kabels mittels der Kabelverschraubung durchgeführt werden und sich das Kabel beidseits dieser Kabelverschraubung erstrecken, was zum Beispiel bei Wanddurchführungen vorteilhaft sein kann.

Für die Montage und den Zusammenbau des Klemmeinsatzes und auch für seine Betätigung ist es günstig, wenn der Kontakteinsatz im wesentlichen aus einem Ring und wenigstens einem, insbesondere mehreren von diesem ausgehenden, durch axial und radial offene Schlitze voneinander getrennten Kontaktfingern besteht, wobei der Ring mit seiner dem/den Kontaktfingern abgewandten Seite dem Klemmeinsatz **benachbart ist. Dadurch** ergibt sich eine Kabelverschraubung, bei welcher von einem mittleren Bereich ausgehend einerseits Klemmfinger und andererseits in entgegengesetzter Richtung Kontaktfinger erstrecken, so daß ein axiales Verschieben des Druckstückes oder der Überwurfmutter durch deren Verschraubung und die Wirkung der Druckflächen einerseits auf die Klemmfinger und andererseits auf die Kontaktfinger die gewünschte Verklemmung und Befestigung am Kabel mit Kontaktierung an dem abisolierten Bereich ergeben.

Für eine eventuelle Demontage ist es zweckmäßig, wenn der Kontakteinsatz gegen eine Rückstellkraft verformbar ist, insbesondere aus rückfederndem Werkstoff besteht und/oder einen gegen eine Elastizitätskraft zusammendrückbaren **Dichtring umgreift**. Wird die Kabelverschraubung wieder gelöst, federt ein derartiger Kontakteinsatz auch wieder in seine Ausgangslage und gibt den abisolierten Bereich des Kabels wieder frei. Ist dabei ein Dichtring vorhanden, kann dieser die Rückfederung der Kontaktfinger des Kontakteinsatzes bewirken oder unterstützen und steht gleichzeitig auch für eine bessere Abdichtung der gesamten Kabelverschraubung gegenüber dem Kabel im abisolierten Bereich zur Verfügung. Außerdem kann ein solcher Dichtring die Kontaktfinger vor allem bei einem aus Metall bestehenden Kontakteinsatz abfedern und dadurch eine Beschädigung des abisolierten Bereiches des Kabels verhindern. Ein solcher von dem Kontakteinsatz umschlossener oder umgriffener Dichtring hat also eine Mehrfachfunktion, wobei lediglich darauf zu achten ist, daß der Dichtring die eigentlichten Kontaktflächen des Kontakteinsatzes freiläßt.

Eine Ausgestaltung der Erfindung von ganz erheblicher und vorteilhafter Bedeutung kann darin bestehen, daß der elektrisch leitende Kontakteinsatz aus elektrisch leitendem Kunststoff oder **aus Kunststoff besteht, wobei der Kontakteinsatz** an der Oberfläche wenigstens bereichsweise mit einer elektrisch leitenden Schicht versehen **ist**, beispielsweise aus metallisiertem oder mit Metall beschichtetem oder bedampftem und/oder mit aus ihm vorstehenden Metalleinlagen versehenem Kunststoff besteht. Ein Kontakteinsatz aus Kunststoff vermindert oder vermeidet die Gefahr, daß durch sein Anpressen an die Oberfläche des abisolierten Kabels diese beschädigt wird, was bei einem aus Metall bestehenden Kontakteinsatz vor allem dann zu befürchten ist, wenn gleichzeitig mit Hilfe der Kabelverschraubung eine hohe Zugentlastung erreicht werden soll und das Gewinde entsprechend stark angezogen wird. Außerdem läßt sich ein Kontakteinsatz aus metallisiertem Kunststoff mit guten Rückstelleigenschaften versehen, so daß das Lösen der Kabelverschraubung auch zu einer entsprechend einfachen und sicheren Lösebewegung im Bereich der Kontaktierung führt, während ein Kontakteinsatz aus Metall möglicherweise durch die beim Verklemmen erfolgende Verformung seine eingenommene Lage auch beim Lösen der Verschraubung beibehält und die Demontage erschwert.

Ferner erlaubt die Fertigung des Kontakteinsatzes aus elektrisch leitendem Kunststoff eine weitere besonders vorteilhafte Ausgestaltung der Erfindung dahingehend, daß der aus Kunststoff bestehende Klemmeinsatz und der aus Kunststoff bestehende Kontakteinsatz einen Klemmkörper bildend einstückig verbunden sind und insbesondere aus demselben Kunststoff bestehen, wobei zumindest die Kontaktfinger des Kontakteinsatzes oder der den Klemmeinsatz und den Kontakteinsatz umfassende Klemmkörper insgesamt aus elektrisch leitendem Kunststoff bestehen können. Somit ergibt sich ein einziges Teil, welches einerseits zum Verklemmen des isolierten Bereiches des Kabels und eventuell zum Andrücken einer von ihm erfaßten Dichtung gegen das Kabel und andererseits mittels der Kontaktfinger zum elektrisch leitenden Verbinden dienen kann und als ein einziges Klemmkörperteil hergestellt und entsprechend einfach bei der Montage der Kabelverschraubung gehandhabt werden kann.

Der/die Kontaktfinger können an ihrem Ende eine radial nach außen - also ihrer Verformung beim Kontaktieren entgegengesetztgerichtete Verbreiterung haben, deren äußerer Randbereich an der sich verjüngenden Druckfläche innerhalb der Halte- oder Schraubhülse anliegt. Durch die axiale Verschiebung beim Verschrauben des Gewindes werden also diese Verbreiterungen radial nach innen bewegt, was zu einer etwa um die Abmessung der Verbreiterung größeren radialen Einwärtsbewegung führt. Dadurch kann ausgeglichen werden, daß der abisolierte Bereich des Kabels, in welchem diese Klemmfinger zur Wirkung kommen sollen, einen geringeren Durchmesser als das isolierte Kabel hat. Trotz dieses geringeren Durchmessers kann eine gute und feste Kontakt- und Klemmkraft aufgrund dieser radialen Verbreiterungen erzielt werden.

Die radiale Abmessung der Verbreiterung der Kontaktfinger kann dabei etwa der Dicke der Isolierung des Kabels beziehungsweise der Verminderung der Kabeldicke beim Abisolieren entsprechen. Auf diese Weise ergibt sich eine Anpassung der Abmessung der radialen Verbreiterung an die Dicke der Kabelisolierung beziehungsweise die Querschnittsverminderung des Kabels beim Abisolieren.

Die Halte- oder Schraubhülse kann in ihrem Inneren eine Hinterschneidung zur Aufnahme der Verbreiterungen der Kontaktfinger in entspannter Lage aufweisen und die sich verjüngende Druckfläche kann im Inneren dieser Hinterschneidung beginnen und sich von dort in radialer und axialer Richtung zur Mitte der Schraubhülse hin erstrecken. Die Hinterschneidung erlaubt die Unterbringung der Verbreiterung auch bei entspanntem Kontakteinsatz und ermöglicht eine genügend breite sich verjüngende Druckfläche, um schon bei der ersten Axialbewegung zwischen Druckstück und Halte- oder Schraubhülse die Verformung der Kontaktfinger nach innen zu beginnen. Darüber hinaus wird schon vor der Verschraubung und sogar vor der Anbringung der Überwurfmutter oder des Druckstückes der Kontakteinsatz - und bei einstückiger Verbindung mit dem Klemmeinsatz auch dieser - unverlierbar gemacht, so daß die radialen Verbreiterungen eine zusätzliche Funktion haben.

Zur Verbesserung der Dichtwirkung kann an der Außenseite des Klemmeinsatzes und/oder des Kontakteinsatzes ein Dichtring, insbesondere ein in einer Ringnut angeordneter O-Ring vorgesehen sein, der mit einem ringförmigen Innenwandbereich der Halte- oder Schraubhülse in Dichtungsberührung ist und in axialer Richtung gegenüber diesen Ringbereich verschiebbar ist. Somit kann dieser Dichtring sowohl in entspannter als auch in verklemmter Gebrauchslage abdichten und befindet sich dabei an einer Stelle, die durch die Verklemmung und Kontaktierung nicht oder kaum verformt wird, so daß die Dichtigkeit dieses Dicht- oder 0-Ringes sowohl vor, als auch während der Montage als vor allem auch in Gebrauchslage besteht. Trotz der beim Verklemmen erfolgenden Axialbewegung bleibt also die Dichtigkeit zwischen Klemm- oder Kontakteinsatz und Halte- oder Schraubhülse bestehen.

Eine abgewandelte, ebenfalls vorteilhafte, die Kontaktierung eventuell verstärkende Ausgestaltung der Erfindung kann darin bestehen, daß an der den Klemmfingern abgewandten Stirnseite des Klemmeinsatzes eine sich verjüngende Druckfläche oder ein Druckring mit einer sich verjüngenden Druckfläche vorgesehen ist, wobei die Verjüngung von außen nach innen in axialer Richtung zu den Klemmfingern hin gerichtet ist, daß der Kontakteinsatz an beiden Stirnflächen mündende Schlitze und mit den beiden sich verjüngenden Druckflächen zusammenwirkende Stirnseiten hat und bei axialer Verstellung des Druckstückes, insbesondere beim Anziehen des Gewindes zwischen Druckstück und Schraubhülse, durch beide konischen oder sich verjüngenden Druckflächen jeweils gegensinnig beaufschlagbar und dadurch radial zusammendrückbar ist und daß dieser Kontakteinsatz aus elektrisch leitendem Werkstoff oder aus elektrisch leitendem Kunststoff, beispielsweise aus metallisiertem oder mit Metall bedampftem oder beschichtetem oder Metall enthaltendem Kunststoff besteht. Ein derartiger, von dem Klemmeinsatz unabhängig bleibender Kontakteinsatz kann durch die beidseitige Beaufschlagung und Zusammendrückung eine höhere Anpreßkraft entfalten und damit den Kontakt verbessern oder bei unregelmäßiger Oberfläche des Metallgeflechtes oder dergleichen einen trotzdem ausreichenden Kontakt sicherstellen. Darüber hinaus ergibt sich so ein Kontakteinsatz, der auch unabhängig von dem Klemmeinsatz entweder als Klemmeinsatz für isolierte Kabel oder aber auch als separater Kontakteinsatz für nicht isolierte Kabel bei gleichzeitiger Verklemmung dienen kann.

Die axialen Schlitze des mit zwei gegensinnigen Druckflächen zusammenwirkenden Kontakteinsatzes können sich dabei an ihren geschlossenen Enden jeweils gegenseitig überlappen. Eine entsprechend große radiale Einwärtsbewegung ist bei einem derartig geschlitzten Kontaktring mit beidseitiger Druckbeaufschlagung an seinen Stirnseiten möglich. Somit ergibt sich nicht nur ein sehr guter Kontakt, sondern außerdem eine zusätzliche Zugentlastung des Kabels.

Vor allem bei Kombination einzelner oder mehrerer der vorbeschriebenen Merkmale und Maßnahmen ergibt sich eine Kabelverschraubung, bei welcher eine schonende Kontaktierung mit einer abisolierten Zone des Kabels möglich ist, weil die Zugentlastung durch einen an dem isolierten Teil angreifenden Klemmeinsatz erfolgen kann und die Möglichkeit besteht, den Kontakteinsatz aus Druckkräfte besser verteilendem Kunststoff mit elektrischer Leitfähigkeit zu fertigen. Dabei ist weiterhin günstig, daß eine derartige Kabelverschraubung durch eine einfache Drehbewegung beim Anziehen des Gewindes zwischen Halte- oder Schraubhülse und Gegenhülse zur Wirkung gebracht wird und nicht abisolierte Drähte zwischen Klemmeinsatz und Schraubhülse eingeführt und dort angedrückt werden müssen.

Nachstehend sind Ausführungsbeispiele der Erfindung anhand der Zeichnung näher beschrieben. Es zeigt in zum Teil schematisierter Darstellung:
- Fig.1: eine auseinandergezogene oder Explosions-Darstellung einer erfindungsgemäßen Kabelverschraubung, zur Hälfte im Längsschnitt, die einen einstückig aus Kunststoff bestehenden Klemmkörper aus metallisiertem Kunststoff enthält, der einerseits als Klemmeinsatz und andererseits als Kontakteinsatz dient,
- Fig.2: eine teilweise im Längsschnitt gehaltene Ansicht der Kabelsverschraubung gemäß Fig.1 in montiertem Zustand und in Gebrauchsstellung nach dem Anziehen der Überwurfmutter und dem Anpressen sowohl des Klemmeinsatzes an einem isolierten Bereich des Kabels als auch des Kontakteinsatzes an einer abisolierten Zone des Kabels,
- Fig.3: eine der Fig.1 entsprechende Explosionsdarstellung einer abgewandelten Ausführungsform, bei welcher ein Klemmeinsatz und ein davon getrennter Kontakteinsatz aus metallisiertem Kunststoff miteinander zusammenwirkend vorgesehen sind, wobei der Kontakteinsatz an beiden Stirnflächen Schrägflächen zum Zusammenwirken mit entsprechenden schrägen oder konischen Druckflächen einerseits an dem Klemmeinsatz und andererseits im Inneren der Halte- oder Schraubhülse aufweist,
- Fig.4: eine der Fig.2 entsprechende Darstellung der Kabelverschraubung gemäß Fig.3 in Gebrauchsstellung, zur Hälfte in Ansicht und zur Hälfte im Längsschnitt,
- Fig.5: eine wiederum abgewandelte Ausführungsform in Explosionsdarstellung und dabei zur Hälfte im Längsschnitt, wobei ein Klemmeinsatz und ein davon getrennter Kontakteinsatz beispielsweise aus Metall oder aus metallisiertem Kunststoff vorgesehen ist, sowie
- Fig.6: die Kabelverschraubung gemäß Fig.5 in Gebrauchsstellung, wobei der insbesondere aus Metall bestehende Kontakteinsatz einen Dichtring umschließt, gegen dessen Elastizitätskraft die Kontaktfinger an einer abisolierten Zone des Kabels andrückbar sind.

Bei den nachfolgend beschriebenen unterschiedlichen Ausführungsbeispielen einer im ganzen mit 1 bezeichneten Kabelverschraubung für ein Erdungs- oder Abschirmkabel 2 werden übereinstimmende oder sich in ihrer Funktion entsprechende Teile mit denselben Bezugszahlen versehen, auch wenn sie unterschiedlich geformt oder gestaltet sind.

Die in den Ausführungsbeispielen dargestellte Kabelverschraubung 1 dient zum zugfesten Befestigen und Halten des Erdungs- oder Abschirmkabels 2, im folgenden kurz "Kabel 2" genannt.

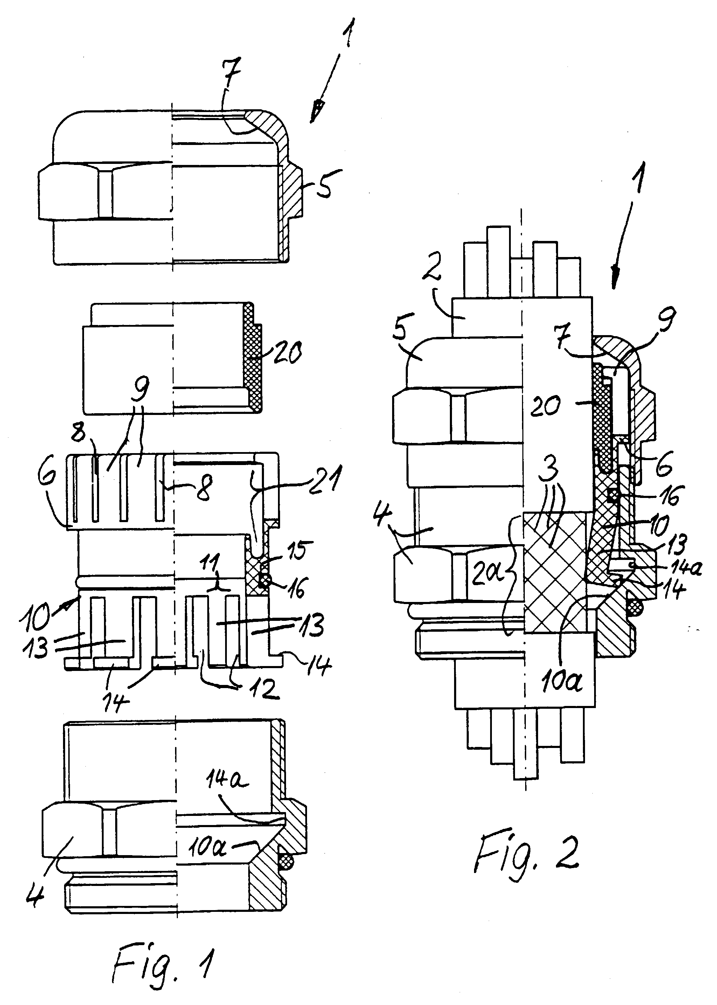

In den Figuren 2, 4 und 6 ist angedeutet, daß solche Kabel 2 ein Metallgeflecht 3 zur Erdung oder Abschirmung des Kabelinneren aufweisen und dieses Metallgeflecht 3 und seine Drähte im Bereich der Kabelverschraubung 1 auf ein kurzes Stück des Kabels 2 abisoliert werden, um für eine Kontaktverbindung mit der Kabelverschraubung 1 geeignet zu sein.

Die Kabelverschraubung 1 weist eine Aufnahme- oder Schraubhülse 4 aus elektrisch leitendem Werkstoff, also bevorzugt aus Metall, und eine damit verbindbare oder verschraubbare Gegenhülse 5 auf, die in den Ausführungsbeispielen jeweils als Überwurfmutter ausgebildet ist, aber auch ein Druckstück sein könnte, das mit einem Außengewinde in ein Innengewinde der Schraubhülse 4 eingreifen könnte. Die Schraubhülse 4 könnte auch in anderer Weise als durch Verschrauben an einer Wandung, einem Gehäuse oder dergleichen anbringbar sein.

Zu der Kabelverschraubung 1 gehört ferner ein Klemmeinsatz 6, mit welchem das Kabel 2 als solches in seinem nicht abisolierten Bereich fixiert wird. Dazu beaufschlagt und übergreift die Gegenhülse 5 den Klemmeinsatz 6 mit einer im wesentlichen ringartigen Druckfläche 7 an einer Stirnseite und beim Anziehen des Gewindes zwischen Gegenhülse 5 und Schraubhülse 4 bewirkt diese Druckfläche 7 aufgrund einer sich verjüngenden Form, im Ausführungsbeispiel aufgrund einer konischen Form, welche in allen Ausführungsbeispielen im Inneren der Gegenhülse 5 vorgesehen ist, aber auch an dem Klemmeinsatz 6 selbst oder in der Schraubhülse 4 angeordnet werden könnte, daß ein mit axialen Schlitzen 8 versehener, Klemmfinger 9 bildender Bereich des Klemmeinsatzes 6 vor allem an den in axialer Richtung stirnseitigen Enden der Klemmfinger 9 radial gegen das Kabel 2 hin verformt wird. Auf diese Weise wird die Zugentlastung an dem Kabel 2 in dessen isoliertem Bereich bewirkt und das Kabel 2 durch diese Verklemmung in axialer Richtung in der Kabelverschraubung 1 festgelegt.

Dabei erkennt man in allen Ausführungsbeispielen, daß an der Innenseite des Klemmeinsatzes 6 im Bereich der Klemmfinger 9 eine ringförmig umlaufende, etwa hülsenartige Dichtung 20 vorgesehen ist, also die gesamte Kabelverschraubung 1 gleichzeitig als druckdichte Kabelverschraubung 1 eingesetzt werden kann. Dies wird dadurch ermöglicht, daß der Klemmeinsatz 6 aus Kunststoff besteht und entsprechende Einformungen und eine Hinterschneidung 21 haben kann, was bei einem aus Blech gefertigten Klemmeinsatz mit vernünftigem Aufwand kaum verwirklicht werden könnte.

Vor allem ist bei allen Ausführungsbeispielen der Kabelverschraubung 1 vorgesehen, daß in axialer Verlängerung des Klemmeinsatzes 6 auf der dessen Klemmfingern 9 abgewandter Seite im Bereich der abisolierten Zone 2a oder abisolierter Drähte des Kabels 2 ein Kontakteinsatz 10 aus elektrisch leitendem Werkstoff und im Inneren der Halte- oder Schraubhülse 4 eine konische oder gerundete, sich verjüngende Druckfläche 10a zum Zusammenwirken mit der dem Klemmeinsatz 6 abgewandten Stirnseite des Kontakteinsatzes 10 in der Weise vorgesehen und angeordnet sind, daß beim axialen Verschieben oder Anziehen des Gewindes der Gegenhülse oder Überwurfmutter 5 dieser Kontakteinsatz 10 im Bereich der ihn beaufschlagenden Druckfläche 10a radial nach innen verformbar und an der abisolierten Zone 2a oder den abisolierten Drähten oder sonstigen elektrischen Leitern kontaktbildend andrückbar ist.

Mit dem Klemmeinsatz 6 kann also die Kabelverschraubung 1 das Kabel 2 mit hoher Klemmkraft erfassen und eine entsprechend gute Zugentlastung bewirken und erforderlichenfalls mit Hilfe der Dichtung 20 gleichzeitig gut abdichten. Darüber hinaus wird jedoch erreicht, daß schon durch das Anziehen des Gewindes der Gegenhülse oder Überwurfmutter 5 gegenüber der Halte- oder Schraubhülse 4 gleichzeitig eine elektrische Verbindung hergestellt wird, so daß also eine einzige Schraub- und Anziehbewegung gleichzeitig die Verklemmung, die Abdichtung und die Kontaktierung bewirkt.

Dabei ist wiederum bei allen Ausführungsbeispielen vorgesehen, daß der Kontakteinsatz 10 im wesentlichen aus einem Ring 11 und wenigstens einem, im Ausführungsbeispiel mehreren am Umfang des Ringes 11 gleichmäßig verteilten und von diesem ausgehenden, durch axial und radial offene Schlitze 12 voneinander getrennten Kontaktfingern 13 besteht, wobei der Ring 11 mit seiner den Kontaktfingern 13 abgewandten Seite dem Klemmeinsatz 6 benachbart ist oder an ihn angrenzt.

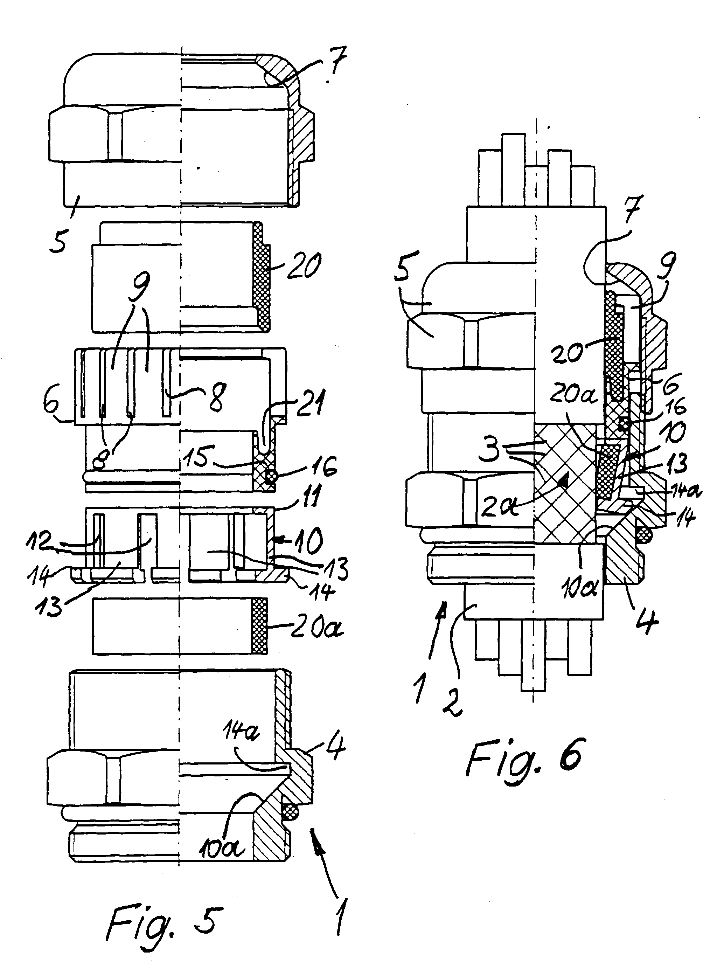

Dieser Kontakteinsatz 10 ist dabei gegen eine Rückstellkraft verformbar, die auf unterschiedliche Weise erzeugt sein kann. Beispielsweise kann er gemäß den Figuren 1 bis 4 aus rückfederndem Werkstoff, insbesondere noch näher zu erläuterndem metallisiertem und damit elektrisch leitendem Kunststoff bestehen oder er kann gemäß Fig.5 und 6 einen gegen eine Elastizitätskraft zusammendrückbaren Dichtring 20a enthalten oder umgreifen und dann gegebenenfalls aus Metall bestehen, wobei jedoch auch dieser Kontakteinsatz 10 mit Dichtring 20a aus elektrisch leitendem Kunststoff gefertigt sein könnte.

Wie bereits erwähnt, kann also der elektrisch leitende Kontakteinsatz 10 aus elektrisch leitendem Kunststoff oder aus einem zumindest an der Oberfläche wenigstens bereichsweise mit einer elektrisch leitenden Schicht versehenen Kunststoff, beispielsweise aus metallisiertem oder mit Metall beschichtetem oder bedampftem und/oder mit aus ihm vorstehenden Metalleinlagen versehenen Kunststoff bestehen. Somit kann er im Spritzgießverfahren hergestellt werden, was die Ausbildung der Kontaktfinger 13 erleichtert, und hat eine eigene Elastizität und Rückstellkraft, was die Demontage der Kabelverschraubung 1 erleichtert. Außerdem können sich aus solchem Kunststoff bestehende Kontaktfinger 13 besser an die abisolierte Zone 2a des Kabels 2 anschmiegen, ohne die Drähte des Metallgeflechtes oder sonstige dort befindliche abisolierte Leiter zu beschädigen, was beim Ausführungsbeispiel gemäß Fig.5 und 6 durch den zusätzlichen Dichtring 20a und dessen Polsterwirkung vermieden werden kann.

Vor allem erlaubt die Fertigung des Kontakteinsatzes 10 aus Kunststoff die Ausführungsform gemäß Fig.1 und 2, bei welcher der aus Kunststoff bestehende Klemmeinsatz 6 und der aus Kunststoff bestehende Kontakteinsatz 10, einen einzigen Klemmkörper bildend, einstückig verbunden sind. Wichtig ist dabei, daß zumindest die Kontaktfinger 13 des Kontakteinsatzes 10 oder gegebenenfalls der den Klemmeinsatz 6 und den Kontakteinsatz 10 umfassende Klemmkörper insgesamt aus elektrisch leitendem Kunststoff bestehen. In einem einzigen Spritzgießverfahren kann so dieser Klemmkörper gefertigt werden und darüber hinaus ist er auch nur ein einziges Teil, das später gelagert oder bei der Montage in die Kabelverschraubung 1 eingebracht werden muß. Die einstückige Verbindung erfolgt dabei im Bereich des Ringes 11 des Kontakteinsatzes 10.

Sowohl in diesem Ausführungsbeispiel gemäß Fig.1 und 2 als auch im Ausführungsbeispiel gemäß Fig.5 und 6 ist vorgesehen, daß die kontaktfinger 13 an ihrem Ende eine radial nach außen gerichtete Verbreiterung 14 haben, deren äußerer Randbereich an der sich verjüngenden Druckfläche 10a innerhalb der Schraubhülse 4 anliegt. Die radiale Abmessung dieser Verbreiterung 14 der Kontaktfinger 13 entspricht dabei etwa der Isolierung des Kabels 2, also der Verminderung der Kabeldicke beim Abisolieren und berücksichtigt somit den geringeren Querschnitt der abisolierten Zone 2a gegenüber dem isolierten Kabel 2. Bei etwa gleichen Schrägungswinkeln der Druckflächen 7 und 10a können so bei ein und derselben Schraubbewegung dennoch die in diesen unterschiedlichen Bereichen und an unterschiedlichen Durchmessern gewünschten Andrückbewegungen durchgeführt werden.

Die Halte- oder Schraubhülse 4 gemäß den Figuren 1 und 2 bzw. 5 und 6 hat dabei in ihrem Inneren eine Hinterschneidung 14a zur Aufnahme der Verbreiterung 14 der Kontaktfinger 13 in entspannter Lage und die sich verjüngende Druckfläche 10a beginnt bereits im Inneren dieser Hinterschneidung 14a und erstreckt sich von dort in radialer und axialer Richtung zur Mitte der Halte- oder Schraubhülse 4 hin und formt dabei im Ausführungsbeispiel einen negativen Kegelstumpf, der aufgrund der Hinterschneidung 14a größer als der von der Druckfläche 7 gebildete negative Kegelstumpf ist. Diese Maßnahmen tragen dazu bei, daß beim Anziehen des Gewindes zwischen Halte- oder Schraubhülse 4 und Druckstück oder Überwurfmutter 5 die unterschiedlich großen radialen Verformungen der Klemmfinger 9 und der Kontaktfinger 13 mit entsprechenden Klemm-, Halte- und Kontaktkräften erfolgen.

In allen Ausführungsbeispielen erkennt man an der Außenseite des Klemmeinsatzes 6 einen Dichtring, der dabei als ein in einer Ringnut 15 angeordneter 0-Ring 16 ausgebildet ist und gegebenenfalls auch an dem Kontakteinsatz 10 vorgesehen sein könnte. Zumindest im Ausführungsbeispiel gemäß Fig.1 und 2 ist er praktisch an der Stelle angeordnet, wo Klemmeinsatz 6 und Kontakteinsatz 10 ineinander übergehen und einstückig verbunden sind. Dieser Dicht- oder O-Ring 16 bewirkt mit einem ringförmigen Innenwandbereich der Halte- oder Schraubhülse 4 gemäß den Figuren 2, 4 und 6 eine Dichtungsberührung und ist dabei in axialer Richtung gegenüber diesem inneren Ringbereich der Hülse 4 verschiebbar, so daß er auch in unterschiedlichen Positionen und Klemmphasen der Kabelverschraubung 1 schon eine Dichtwirkung ausüben kann. Die Verschraubung und das Anziehen des Gewindes zwischen Hülse 4 und Gegen- oder Druckstück 5 bewirkt nämlich auch eine axiale Relativbewegung im Bereich dieses O-Ringes 16, entsprechend der axialen Verschiebung der Kontaktfinger 13 entlang der konischen Druckfläche 10a.

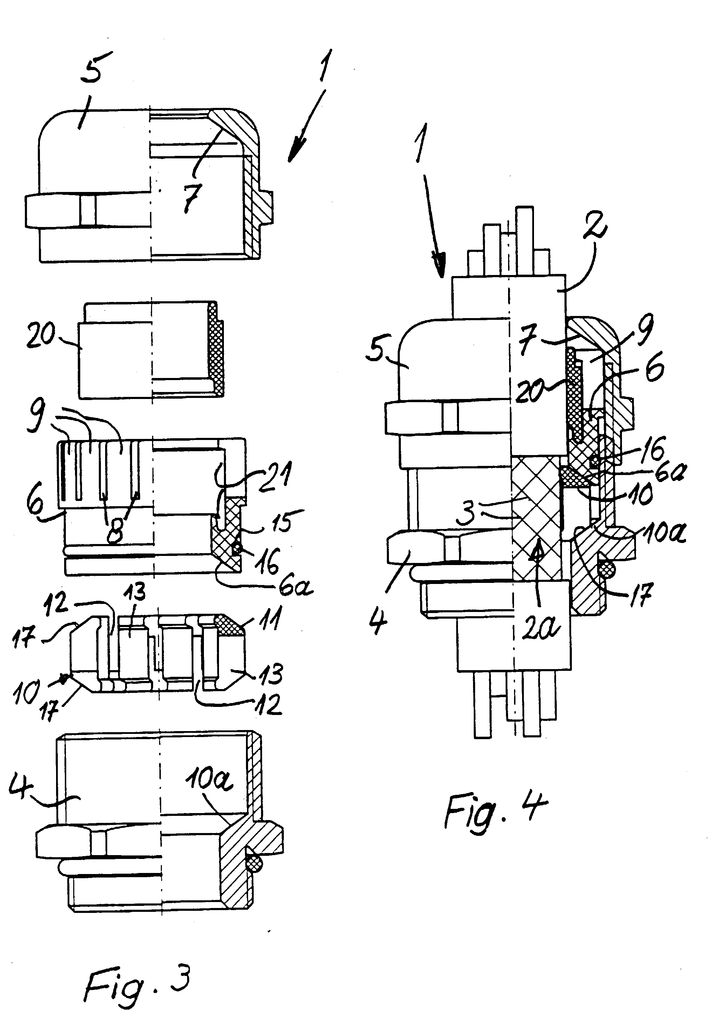

Im Ausführungsbeispiel gemäß Fig.3 und 4 ist eine andere Möglichkeit dargestellt, wie der Kontakteinsatz 10 den größeren radialen Weg überbrücken kann, der sich durch das Fehlen der Isolierung in dem abisolierten Bereich 2a des Kabels 2 ergibt, wenn trotzdem eine einzige Schraub- und Anziehbewegung zwischen Halte- oder Schraubhülse 4 und Gegenhülse oder Überwurfmutter 5 dazu ausreichen soll, sowohl den Klemmeinsatz 6 als auch diesen Kontakteinsatz 10 jeweils mit dem Kabel 2 beziehungsweise der abisolierten Zone 2a zu verklemmen und in ausreichenden Kontakt zu bringen.

Dazu ist im Ausführungsbeispiel gemäß Fig.3 und 4 vorgesehen, daß an der den Klemmfingern 9 abgewandten Stirnseite des Klemmeinsatzes 6 ebenfalls eine sich verjüngende Druckfläche 6a vorgesehen ist, die in diesem Ausführungsbeispiel unmittelbar an dem Klemmeinsatz 6 angeordnet ist. Es könnte aber dort auch ein Druckring mit einer derartigen sich verjüngenden Druckfläche 6a in die Kabelverschraubung 1 eingefügt sein. Die Verjüngung ist dabei von außen nach innen in axialer Richtung zu den Klemmfingern 9 hin gerichtet, verläuft also in derselben Richtung, gegebenenfalls parallel, wie die Druckfläche 7 und entgegengesetzt zu der Anordnung und Orientierung der Druckfläche 10a.

Der Kontakteinsatz 10 hat in diesem Ausführungsbeispiel an seinen beiden, ebenfalls in analoger Weise zu den Druckflächen 10a und 6a konischen Stirnflächen 17 mündende Schlitze 12 und mit den beiden sich verjüngenden Druckflächen 10a und 6a zusammenwirkende Stirnseiten, so daß bei der axialen Verstellung des Druckstückes, also der Gegenhülse 5 oder Überwurfmutter, das heißt beim Anziehen des Gewindes zwischen Überwurfmutter 5 und Schraubhülse 4, durch beide konischen und sich verjüngenden Druckflächen 10a und 6a die nun gewissermaßen gegensinnig abwechselnd nach der einen und der anderen Seite gerichteten Kontaktfinger 13 jeweils gegensinnig beaufschlagt und dadurch radial zusammengedrückt werden. Dadurch kann eine entsprechend große radiale Verformung erfolgen und somit der Durchmesserunterschied in der abisolierten Zone 2a überbrückt werden.

Dieser Kontakteinsatz 10 gemäß dem Ausführungsbeispiel in Fig.3 und 4 kann also in seiner Form etwa dem Klemmring gemäß Fig.6 ff. aus DE-GM 94 01 973 U oder auch DE-GM 296 12 482 U entsprechen. Dabei besteht dieser Kontakteinsatz 10 wiederum aus elektrisch leitendem Werkstoff, um den elektrischen Kontakt zwischen der abisolierten Zone 2a und der Halte- oder Schraubhülse 4 in Gebrauchsstellung herzustellen. Zwar könnte er auch aus Metall bestehen und in seinem Inneren einen eine Rückstellkraft bewirkenden Dichtring 20a enthalten, jedoch ist im Ausführungsbeispiel vorgesehen, daß er ebenfalls aus elektrisch leitendem Kunststoff, beispielsweise metallisiertem oder mit Metall bedampftem oder beschichtetem oder Metall enthaltendem Kunststoff besteht. Somit kann er im Spritzgießverfahren hergestellt werden, weist selbst die elastischen Rückstellkräfte auf, um bei der Demontage einfach wieder gelöst werden zu können, und läßt sich ohne Beschädigungsgefahr an das Drahtgeflecht oder die Drähte der abisolierten Zone 2a andrücken, wobei sogar eine derartige Anpreßkraft ohne Gefahr für die abisolierte Zone 2a erzeugt werden kann, daß eine zusätzliche Zugentlastung und Verklemmung bewirkt wird.

Dabei erkennt man, daß die axialen Schlitze 12 des mit zwei gegensinnigen Druckflächen 6a und 10a zusammenwirkenden Kontakteinsatzes 10 sich an ihren geschlossenen Enden jeweils gegenseitig überlappen, das heißt die nach jeweils entgegengesetzten Seiten offenen Schlitze 12 sind länger als die halbe axiale Ausdehnung dieses Kontakteinsatzes 10, so daß eine große radiale Zusammendrückung ermöglicht wird.

Schließlich sei noch erwähnt, daß in allen Ausführungsbeispielen angedeutet ist, daß die Isolierung des Kabels 2 beidseits der abisolierten Zone 2a vorhanden sein kann, also die Kabelverschraubung 1 an beliebiger Stelle eines Kabels und nicht nur an einem Ende angebracht werden kann. Somit ist die Kabelverschraubung 1 auch gut für solche Fälle geeignet, in denen ein durchlaufendes Kabel im Bereich einer von ihm durchsetzten Wandung oder dergleichen gehalten werden soll, wobei an dieser Stelle dann gleichzeitig die Kontaktierung mit dem Erdungs- oder Abschirm-Geflecht 3 hergestellt werden kann.

Die Kabelverschraubung 1 dient nicht nur zum Verklemmen und Halten eines Erdungs- oder Abschirmkabels 2 mit unter einer Isolierung angeordnetem Metallgeflecht, sondern auch dazu, an einer abisolierten Zone 2a dieses Kabels 2 einen elektrischen Kontakt herzustellen. Für die Fixierung dient dabei ein Klemmeinsatz 6 und für die Kontaktierung ein in axialer Verlängerung zu diesem Klemmeinsatz 6 angeordneter Kontakteinsatz 10, wobei der Klemmeinsatz 6 einerseits und der Kontakteinsatz 10 andererseits jeweils von einer Druckfläche 7 und 10a in der Weise beaufschlagt werden, daß bei einer einzigen Schraubbewegung zum gegenseitigen Verschrauben einer Halte- oder Schraubhülse 4 mit einer Gegenhülse oder Überwurfmutter 5 sowohl der Klemmeinsatz 6 als auch der Kontakteinsatz 10 radial nach innen verformt und mit der jeweiligen Stelle des Kabels 2 in Klemm- und Kontaktverbindung gebracht werden. Dabei kann in vorteilhafter Weise auch der Kontakteinsatz 10 aus elektrisch leitendem Kunststoff bestehen und dies ermöglicht es, ihn in einem Stück mit dem Klemmeinsatz zu fertigen.

## Patentansprüche

1. Kabelverschraubung (1) für Erdungs- oder Abschirm-Kabel (2) mit einer Halte- oder Schraubhülse (4) oder Aufnahmehülse aus elektrisch leitendem Werkstoff, insbesondere aus Metall, mit einer damit über ein Gewinde verbindbaren Gegenhülse (5) oder dergleichen Druckstück, insbesondere mit einer Überwurfmutter, zum Fixieren des ein Metallgeflecht (3) oder Kabelaußenleiter zur Erdung oder Abschirmung des Kabelinneren aufweisenden Kabels (2) mit einem mit Hilfe der Gegenhülse (5) gegen das Kabel (2) preßbaren Klemmeinsatz (6), wobei die Gegenhülse (5) den Klemmeinsatz (6) mit einer im wesentlichen ringartigen Druckfläche (7) zumindest an einer der Stirnseiten beaufschlagt oder übergreift und beim Anziehen des Gewindes mit einer sich verjüngenden Form, zum Beispiel mittels Rundung oder mittels eines Konus, welcher am Klemmeinsatz (6) und/oder in der Schraubhülse (4) oder anstelle der ringartigen Druckfläche in der Gegenhülse (5) angeordnet ist, **und durch welchen ein** mit axialen Schlitzen (8) versehener, Klemmfinger (9) bildende**r** Bereich des Klemmeinsatzes (6) radial **nach innen** hin verform**bar ist**, wobei in Verlängerung des Klemmeinsatzes an seinem den Klemmfingern abgewandten Bereich in Gebrauchsstellung eine elektrische Verbindung mit einer abisolierten Zone (2a) des Kabels (2) oder mit abisolierten Drähten des Metallgeflechtes oder des oder der Kabelaußenleiter besteht, **dadurch gekennzeichnet**, daß die Kabelverschraubung (1) in axialer Verlängerung des Klemmeinsatzes (6) auf der dessen Klemmfingern (9) abgewandter Seite im Bereich der abisolierten Zone (2a) oder abisolierten Drähte **in Gebrauchsstellung** einen Kontakteinsatz (10) aus elektrisch leitendem Werkstoff aufweist und im Inneren der Halte- oder Schraubhülse (4) eine konische oder gerundete, sich verjüngende Druckfläche (10a) zum Zusammenwirken mit der dem Klemmeinsatz (6) abgewandten Stirnseite des Kontakteinsatzes (10) in der Weise vorgesehen ist, daß beim axialen Verschieben oder Anziehen des Gewindes der Gegenhülse (5) **zur Schraubhülse (4) hin** der Kontakteinsatz (10) im Bereich der ihn beaufschlagenden Druckfläche (10a) radial nach innen verformbar und **in Gebrauchsstellung** an der abisolierten Zone (2a) oder den abisolierten Drähten oder Leitern andrückbar ist.

2. Kabelverschraubung nach Anspruch 1, dadurch gekennzeichnet, daß der Kontakteinsatz (10) im wesentlichen aus einem Ring (11) und wenigstens einem, insbesondere mehreren von diesem ausgehenden, durch axial und radial offene Schlitze (12) voneinander getrennten Kontaktfingern (13) besteht, wobei der Ring (11) mit seiner dem/den Kontaktfingern (13) abgewandten Seite dem Klemmeinsatz (6) **benachbart ist**.

3. Kabelverschraubung nach Anspruch 1 oder 2, dadurch gekennzeichnet, daß der Kontakteinsatz (10) gegen eine Rückstellkraft verformbar ist, insbesondere aus rückfederndem Werkstoff besteht und/oder einen gegen eine Elastizitätskraft zusammendrückbaren Dichtring (20a) **umgreift**.

4. Kabelverschraubung nach einem der Ansprüche 1 bis 3, dadurch gekennzeichnet, daß der elektrisch leitende Kontakteinsatz (10) aus elektrisch leitendem Kunststoff oder aus einem **Kunststoff besteht, wobei der Kontakteinsatz (10)** an der Oberfläche wenigstens bereichsweise mit einer elektrisch leitenden Schicht versehen **ist**, beispielsweise aus metallisiertem oder mit Metall beschichtetem oder bedampftem und/oder mit aus ihm vorstehenden Metalleinlagen versehenen Kunststoff besteht.

5. Kabelverschraubung nach einem der Ansprüche 1 bis 4, dadurch gekennzeichnet, daß der aus Kunststoff bestehende Klemmeinsatz (6) und der aus Kunststoff bestehende Kontakteinsatz (10) einen Klemmkörper bildend einstückig verbunden sind und insbesondere aus demselben Kunststoff bestehen, wobei zumindest die Kontaktfinger (13) des Kontakteinsatzes (10) oder der den Klemmeinsatz (6) und den Kontakteinsatz (10) umfassende Klemmkörper insgesamt aus elektrisch leitendem Kunststoff bestehen.

6. Kabelverschraubung nach einem der Ansprüche 1 bis 5, dadurch gekennzeichnet, daß der/die Kontaktfinger (13) an ihrem Ende eine radial nach außen gerichtete Verbreiterung (14) haben, deren äußerer Randbereich an der sich verjüngenden Druckfläche (10a) innerhalb der Schraubhülse (4) anliegt.

7. Kabelverschraubung nach **Anspruch 6**, dadurch gekennzeichnet, daß die radiale Abmessung der Verbreiterung (14) der Kontaktfinger (13) etwa der Dicke der Isolierung des Kabels (2) beziehungsweise der Verminderung der Kabeldicke beim Abisolieren entspricht.

8. Kabelverschraubung nach einem der Ansprüche **6 oder 7**, dadurch gekennzeichnet, daß die Schraubhülse (4) in ihrem Inneren eine Hinterschneidung (14a) zur Aufnahme der Verbreiterungen (14) der Kontaktfinger (13) in entspannter Lage aufweist und die sich verjüngende Druckfläche (10a) im Inneren dieser Hinterschneidung (14a) beginnt und sich von dort in radialer und axialer Richtung zur Mitte der Halte- oder Schraubhülse (4) hin erstreckt.

9. Kabelverschraubung nach einem der Anspürche 1 bis 8, dadurch gekennzeichnet, daß an der Außenseite des Klemmeinsatzes (6) und/oder des Kontakteinsatzes (10) ein Dichtring, insbesondere ein in einer Ringnut (15) angeordneter 0-Ring (16) vorgesehen ist, der mit einem ringförmigen Innenwandbereich der Halte- oder Schraubhülse (4) in Dichtungsberührung ist und in axialer Richtung gegenüber diesem Ringbereich verschiebbar ist.

10. Kabelverschraubung nach einem der Ansprüche 1 bis **4**, dadurch gekennzeichnet, daß an der den Klemmfingern (9) abgewandten Stirnseite des Klemmeinsatzes (6) eine sich verjüngende Druckfläche (6a) oder ein Druckring mit einer sich verjüngenden Druckfläche vorgesehen ist, wobei die Verjüngung von außen nach innen in axialer Richtung zu den Klemmfingern (9) hin gerichtet ist, daß der Kontakteinsatz (10) an beiden Stirnflächen mündende Schlitze (12) und mit den beiden sich verjüngenden Druckflächen (10a,6a) zusammenwirkende Stirnseiten hat und bei axialer Verstellung des Druckstückes, insbesondere beim Anziehen des Gewindes zwischen Druckstück und Schraubhülse (4), durch beide konischen oder sich verjüngenden Druckflächen (10a,6a) jeweils gegensinnig beaufschlagbar und dadurch radial zusammendrückbar ist und daß dieser Kontakteinsatz (10) aus elektrisch leitendem Werkstoff oder aus elektrisch leitendem Kunststoff, beispielsweise metallisiertem oder mit Metall bedampftem oder beschichteten oder Metall enthaltendem Kunststoff besteht.

11. Kabelverschraubung nach Anspruch 10, dadurch gekennzeichnet, daß die axialen Schlitze (12) des mit zwei gegensinnigen Druckflächen (6a,10a) zusammenwirkenden Kontakteinsatzes (10) sich an ihren geschlossenen Enden jeweils gegenseitig überlappen.

## Claims

1. Screw connection (1) for earth or screened cable (2), having a retaining or screwing sleeve (4) or an accommodating sleeve of electrically conductive material, particularly metal, with a counter-sleeve (5) or similar thrust member which is connectable thereto by means of a thread, particularly with a sleeve nut, for fixing the cable (2), which has a metal braid (3) or external cable conductor for earthing or screening the inside of the cable, with a clamping insert (6) capable of being pressed against the cable (2) by means of the counter-sleeve (5), wherein the counter-sleeve (5) acts on or overlaps the clamping insert (6) with a substantially annular thrust surface (7) at least at one of the end faces and, when the thread is tightened, with a tapering shape, e.g. by means of rounding or by means of a cone, which is arranged on the clamping insert (6) and/or in the screwing sleeve (4) or instead of the annular thrust surface in the counter-sleeve (5), and by means of which a portion of the clamping insert (6) provided with axial slots (8) and forming clamping fingers (9) is deformable radially inwards, whilst on an extension of the clamping insert at its region remote from the clamping fingers in the position of use there is an electrical connection to a stripped zone (2a) of the cable (2) or to stripped wires of the metal braid or of the or each external cable conductor, characterised in that the screw connection (1) for the cable has a contact insert (10) of electrically conductive material on an axial extension of the clamping insert (6) on the side thereof remote from the clamping fingers (9), in the region of the stripped zone (2a) or stripped wires in the position of use, and inside the retaining or screwing sleeve (4) there is provided a conical or rounded tapering thrust surface (10a) for co-operating with the end face of the contact insert (10) remote from the clamping insert (6) in such a way that, when there is axial movement or tightening of the thread of the counter-sleeve (5) towards the screwing sleeve (4), the contact insert (10) is deformable radially inwards in the region of the thrust surface (10a) acting thereon and is capable of being pressed against the stripped zone (2a) or the stripped wires or conductors in the position of use.

2. Screw connection for a cable according to claim 1, characterised in that the contact insert (10) consists essentially of a ring (11) and at least one, particularly several, contact fingers (13) proceeding from this ring (11), which are separated from one another by axially and radially opening slots (12), the side of the ring (11) remote from the contact finger or fingers (13) being adjacent the clamping insert (6).

3. Screw connection for a cable according to claim 1 or 2, characterised in that the contact insert (10) is deformable counter to a recoil force, and particularly consists of a resilient material and/or engages around a sealing ring (20a) which is compressible counter to an elastic force.

4. Screw connection for a cable according to one of claims 1 to 3, characterised in that the electrically conductive contact insert (10) consists of electrically conductive plastics or a plastic, whilst the contact insert (10) is provided on at least parts of its surface with an electrically conductive layer, e.g. it consists of metallised or metal-coated or vapour-coated plastics and/or of plastics provided with metal inserts projecting therefrom.

5. Screw connection for a cable according to one of claims 1 to 4, characterised in that the clamping insert (6) made of plastics and the contact insert (10) made of plastics are integrally connected to form a clamping member and in particular are made from the same plastic material, whilst at least the contact fingers (13) of the contact insert (10) or the clamping member as a whole, which comprises the clamping insert (6) and the contact insert (10), consist of electrically conductive plastics.

6. Screw connection for a cable according to one of claims 1 to 5, characterised in that the contact finger(s)(13) has(have) at its(their) end a radially outwardly directed widened part (14) the outer edge portion of which abuts on the tapering thrust surface (10a) inside the screwing sleeve (4).

7. Screw connection for a cable according to claim 6, characterised in that the radial dimensions of the widened part (14) of the contact fingers (13) correspond substantially to the thickness of the insulation of the cable (2) or the reduction in the cable thickness when the insulation is stripped away.

8. Screw connection for a cable according to one of claims 6 or 7, characterised in that the screwing sleeve (4) has inside it an undercut (14a) for accommodating the widened parts (14) of the contact fingers (13) in the untensioned position and the tapering thrust surface (10a) starts within this undercut (14a) and extends from there in the radial and axial directions to the middle of the retaining or screwing sleeve (4).

9. Screw connection for a cable according to one of claims 1 to 8, characterised in that on the outside of the clamping insert (6) and/or the contact insert (10) a sealing ring is provided, particularly an O-ring (16) which is arranged in an annular groove (15), which is in sealing contact with an annular inner wall portion of the retaining or screwing sleeve (4) and is axially movable relative to this annular region.

10. Screw connection for a cable according to one of claims 1 to 4, characterised in that on the end face of the clamping insert (6) remote from the clamping fingers (9) there is a tapering thrust surface (6a) or a thrust ring with a tapering thrust surface, the taper being directed from the outside inwards, axially towards the clamping fingers (9), the contact insert (10) has slots (12) opening onto both end faces and ends co-operating with the two tapering thrust surfaces (10a,6a), and on axial movement of the thrust member, particularly when the thread between the thrust member and screwing sleeve (4) is tightened, the contact insert can be acted upon in opposite directions by the two conical or tapering thrust surfaces (10a,6a) and is radially compressible by them, and this contact insert (10) consists of electrically conductive material or electrically conductive plastics, e.g. metallised plastic or plastic vapour-coated with metal or plastic coated with or containing metal.

11. Screw connection for a cable according to claim 10, characterised in that the axial slots (12) of the contact insert (10) co-operating with two thrust surfaces (6a,10a) in opposite directions overlap with one another at their closed ends.

## Revendications

1. Raccord vissé (1) pour câble (2) de mise à la masse ou de blindage, avec une douille vissée ou de maintien (4), ou douille réceptrice, en matériau électroconducteur, métal notamment, et avec une contre-douille (5) ou élément de pression analogue, écrou-raccord notamment, pouvant être assemblée à la douille (4) au moyen d'un filetage et destinée à fixer en position le câble (2) - lequel présente une tresse métallique (3) ou conducteur extérieur de câble pour la mise à la masse ou le blindage de l'intérieur du câble - par un insert de serrage (6) pouvant être pressé contre le câble (2) à l'aide de la contre-douille (5), la contre-douille (5) sollicitant ou recouvrant l'insert de serrage (6) sur au moins un de ses côtés frontaux par une face de pression (7) sensiblement annulaire et, lors du vissage du filetage, par une forme allant se rétrécissant, au moyen d'un arrondi ou d'un cône par exemple, qui est prévue sur l'insert de serrage (6) et/ou dans la douille vissée (4) ou à la place de la face de pression annulaire dans la contre-douille (5), et par laquelle une région de l'insert de serrage (6) - région pourvue de fentes axiales (8) et formant des doigts de serrage (9) - peut être déformée radialement vers l'intérieur, une liaison électrique existant en position d'utilisation, dans le prolongement de l'insert de serrage sur sa région opposée aux doigts de serrage (9), avec une zone dénudée (2a) du câble (2) ou avec des fils métalliques dénudés de la tresse métallique ou du ou des conducteurs extérieurs de câble, **caractérisé** en ce que le raccord vissé (1) présente en position d'utilisation, dans le prolongement axial de l'insert de serrage (6) sur le côté opposé à ses doigts de serrage (9), dans la région de la zone dénudée (2a) ou des fils métalliques dénudés, un insert de contact (10) en matériau électroconducteur, et, à l'intérieur de la douille vissée ou de maintien (4), une face de pression (10a) conique ou arrondie, allant en se rétrécissant, destinée à coopérer avec le côté frontal de l'insert de contact (10) qui est opposé à l'insert de serrage (6), est prévue de telle sorte que, lors du déplacement axial ou du vissage du filetage de la contre-douille (5) en direction de la douille vissée (4), l'insert de contact (10) peut être déformé radialement vers l'intérieur dans la région de la face de pression (10a) qui le sollicite et, en position d'utilisation, peut être pressé contre la zone dénudée (2a) ou les conducteurs ou fils métalliques dénudés.

2. Raccord vissé pour câble selon la revendication 1, **caractérisé** en ce que l'insert de contact (10) est constitué pour l'essentiel d'une bague (11) et d'au moins un, notamment de plusieurs doigts de contact (13) partant de cette bague et séparés les uns des autres par des fentes (12) ouvertes axialement et radialement, la bague (11) étant, par son côté opposé au(x) doigt(s) de contact (13), voisine de l'insert de serrage (6).

3. Raccord vissé pour câble selon la revendication 1 ou 2, **caractérisé** en ce que l'insert de contact (10) peut être déformé à l'encontre d'une force de rappel, notamment est constitué d'un matériau à rappel élastique, et/ou s'engage autour d'une bague d'étanchéité (20a) pouvant être comprimée à l'encontre d'une force élastique.

4. Raccord vissé pour câble selon une des revendications 1 à 3, **caractérisé** en ce que l'insert de contact (10) électroconducteur est réalisé en matière plastique électroconductrice ou en une matière plastique, l'insert de contact (10) étant alors pourvu sur sa surface au moins sectoriellement d'une couche électroconductrice, par exemple étant réalisé en matière plastique métallisée ou revêtue de métal ou métallisée sous vide, et/ou pourvue d'incrustations métalliques qui en dépassent.

5. Raccord vissé pour câble selon une des revendications 1 à 4, **caractérisé** en ce que l'insert de serrage (6) réalisé en matière plastique et l'insert de contact (10) réalisé en matière plastique sont assemblés d'un seul tenant en formant un corps de serrage et sont notamment constitués de la même matière plastique, au moins les doigts de contact (13) de l'insert de contact (10), ou bien l'ensemble du corps de serrage regroupant l'insert de serrage (6) et l'insert de contact (10), étant réalisés en matière plastique électroconductrice.

6. Raccord vissé pour câble selon une des revendications 1 à 5, **caractérisé** en ce que le ou les doigts de contact (13) possèdent à leur extrémité une partie élargie (14) dirigée radialement vers l'extérieur, dont la région de bord extérieur s'applique contre la face de pression (10a) allant en se rétrécissant à l'intérieur de la douille vissée (4).

7. Raccord vissé pour câble selon la revendication 6, **caractérisé** en ce que la dimension radiale de la partie élargie (14) des doigts de contact (13) correspond environ à l'épaisseur de l'isolation du câble (2), ou encore à la diminution de l'épaisseur du câble lorsqu'il est dénudé.

8. Raccord vissé pour câble selon la revendication 6 ou 7, **caractérisé** en ce que la douille vissée (4) présente à l'intérieur une contre-dépouille (14a) pour recevoir les parties élargies (14) des doigts de contact (13) dans la position desserrée, et la face de pression (10a) allant en se rétrécissant commence à l'intérieur de cette contre-dépouille (14a) et s'étend de là en direction radiale et axiale vers le milieu de la douille vissée ou de maintien (4).

9. Raccord vissé pour câble selon une des revendications 1 à 8, **caractérisé** en ce qu'une bague d'étanchéité est prévue sur le côté extérieur de l'insert de serrage (6) et/ou de l'insert de contact (10), notamment un joint torique (16) disposé dans une rainure annulaire (15), qui est en contact d'étanchéité avec une région annulaire de la paroi intérieure de la douille vissée ou de maintien (4) et qui peut être déplacé en direction axiale par rapport à cette région annulaire.

10. Raccord vissé pour câble selon une des revendications 1 à 4, **caractérisé** en ce qu'il est prévu une face de pression (6a) allant en se rétrécissant sur le côté frontal de l'insert de serrage (6) qui est opposé aux doigts de serrage (9), ou une bague de pression pourvue d'une face de pression allant en se rétrécissant, le rétrécissement étant dirigé de l'extérieur vers l'intérieur en direction axiale vers les doigts de serrage (9), en ce que l'insert de contact (10) possède des fentes (12) débouchant sur les deux faces frontales et des côtés frontaux coopérant avec les deux faces de pression (10a, 6a) allant en se rétrécissant, et peut, lors du déplacement axial de l'élément de pression, notamment lors du vissage du filetage entre l'élément de pression et la douille vissée (4), être respectivement sollicité en sens contraires par les deux faces de pression (10a, 6a) coniques ou allant en se rétrécissant, et ainsi comprimé radialement, et en ce que cet insert de contact (10) est réalisé en matériau électroconducteur ou en matière plastique électroconductrice, par exemple en matière plastique métallisée ou métallisée sous vide, ou encore revêtue de métal ou contenant du métal.

11. Raccord vissé pour câble selon la revendication 10, **caractérisé** en ce que les fentes axiales (12) de l'insert de contact (10) coopérant avec deux faces de pression (6a, 10a) en sens contraires se chevauchent respectivement en sens contraires à leurs extrémités fermées.
